# EUROPEAN PATENT SPECIFICATION

(11) **EP 4 158 451 B1**
(45) Date of publication and mention of the grant of the patent: **20.08.2025**
(21) Application number: 21736685.5
(22) Date of filing: 31.05.2021
(51) Int. Cl.: G06F 3/01, G02B 27/01, G05B 19/042

(54) **A SYSTEM FOR REMOTE ASSISTANCE OF A FIELD OPERATOR**
SYSTEM ZUR FERNUNTERSTÜTZUNG EINES FELDBETREIBERS
SYSTÈME POUR L'ASSISTANCE À DISTANCE D'UN OPÉRATEUR SUR SITE

(30) Priority: 29.05.2020 IT 202000013000
(43) Date of publication of application: 05.04.2023
(73) Proprietor: VRmedia S.r.l., 56121 Ospedaletto, (PI) (IT)
(72) Inventor: TECCHIA, Franco, 54100 Massa (IT); CARROZZINO, Marcello, 58100 Grosseto (IT); BACINELLI, Sandro, 54100 Massa (IT)
(74) Representative: ABM Agenzia Brevetti & Marchi
(86) International application number: PCT/IB2021/054769
(87) International publication number: WO 2021/240484

(56) References cited:
- WO-A2-2009/112063

## Description

### Field of the invention

The present invention relates to a system for assisting a field operator, for example an industrial plant maintenance operator, by a remote assistant.

### Prior art - Technical problem

There exist remote maintenance systems, as described for instance in WO2009036782A1 and US2020018975A1, in which a video camera (headcam) is provided mounted to a helmet worn by an operator, and a viewer is also provided to show the images taken by the video camera. These systems are configured so that the images taken on the field are shown to a remote assistant, in order to enable the remote assistant to introduce augmented reality additional data, and in order to enable a field operator to see the additional data through the viewer.

The images from the video camera allow to take pictures of most part of the items to be maintained from a remote location. However, in some instances, the field operator must frame hidden details or details located in places that are hardly or not accessible to the operator's head. In this case, the operator normally uses such a device as a mobile phone to take pictures of these details and sends them directly to remote assistant. In some cases, the maintenance operations can require enlarged images of microscopic details, or images of the inside of a duct or a hole. To this purpose, special optical instrumentations are available that, unfortunately, do not allow an easy and real-time interaction with the remote assistant.

WO 2009/112063 A2 discloses a virtual community communication system allowing a plurality of technicians to carry or access an Augmented Reality -enhanced apparatus to exchange streams of data about assembly or servicing or maintenance operations by means of a centralised server and over a LAN or the Internet, the system providing a mechanism for reducing and compensating end-to-end communication latency.

### Summary of the invention

It is therefore a feature of the present invention to provide a system for assisting a field operator, for example a maintenance operator, by a remote assistant, which allows the field operator to take pictures and/or videos of hidden or hardly accessible details and to instantly share them with a remote assistant.

It is also a feature of the invention to provide such a system that allows the operator to take pictures and/or videos of high-temperature objects and to instantly share them with the remote assistant.

It is then a feature of the invention to provide such a system that allows the operator to take enlarged pictures and/or videos of microscopic details, and to instantly share them with the remote assistant.

It is another feature of the invention to provide such a system that allows the operator to take pictures and/or videos of the inside of ducts or holes and to instantly share them with the remote assistant.

It is also a feature of the present invention to provide such a system that makes it possible to limit the band consumption in a data-exchange connection between the field operator and the remote assistant.

These and other features are attained by a system for assisting a field operator, in particular a maintenance field operator, by a remote assistant, as defined in claim 1. Specific advantageous exemplary embodiments of this system are defined in respective dependent claims.

Briefly, the system for assisting a field operator comprises a first group of components configured to be connected to a support wearable on the operator's head, including a first video camera, a local viewer arranged to be watched by the operator, a first control unit and a first wireless connection interface. The system also comprises a handpiece providing a visual sensor such as a video camera or a thermal imaging camera, a serial port for connecting a peripheral device such as an instrument or a sensor or a video source, a second control unit and a second connection interface. The connection interfaces are configured for mutually exchanging data streams, locally or through a remote server available through a data network, said data streams coming from the video camera, from the visual sensor or from the peripheral device, respectively, and intended to be displayed by the local viewer. Moreover, the connection interfaces are configured for exchanging the data streams with an assistant's remote viewer through the remote server. The system also comprises a scenario-switching device for displaying a same data stream of interest at the same time to the local viewer and to the remote viewer, said data stream of interest selected among data streams related to the scenarios framed by the video camera and by the visual sensor, respectively, and to the data obtained from the peripheral device.

More in detail, according to the invention, this system comprises:
- a first video camera, i.e. a headcam, configured:
   - to be fixed on a support wearable on the field operator's head;
   - to frame a first scenario from the support;
   - to generate a first data stream related to the first scenario;
- a local viewer configured to be fixed to the wearable support and to be positioned along a field operator's line of sight;
- a first microprocessor processing unit configured to be fixed to the wearable support;
- a first wireless connection interface to a global data network, configured to be fixed to the wearable support and to exchange data with a remote server through the global data network, typically, through the Internet;
- a handpiece, i.e. a handcam, comprising:
   - a visual sensor, in particular a video camera or a thermal imaging camera, or an integrated visual sensor selectively providing the operations of a video camera and of a thermal imaging camera, the visual sensor configured:
      - to frame a second scenario from the handpiece;
      - to generate a second data stream related to the second scenario;
   - a serial communication port to connect an instrument, in particular a USB port, said serial communication port configured to receive an additional data stream from said instrument;
   - a second microprocessor processing unit;
   - a second connection interface selected between:
   - an inner second connection interface between the second microprocessor processing unit and the first microprocessor processing unit;
   - an outer second connection interface to a global data network, configured to exchange data with the remote server through the global data network,
   wherein the second microprocessor processing unit is functionally connected:
   - with the visual sensor, so as to receive the second data stream related to the scenario framed by the visual sensor of the handpiece;
   - with the second connection interface, so as to emit the second data stream,
   - with the serial communication port, so as to receive the additional data stream, such that the second connection interface can also emit the additional data stream,
   wherein the first microprocessor processing unit is functionally connected:
   - with the first video camera, integral to the operator's head, so as to receive the first data stream;
   - with the inner second connection interface or with said outer second connection interface of said handpiece through said remote server and through said global data network, so as to receive the second data stream or the additional data stream;
   - with the local viewer, so as to transfer and remotely display the second data stream or the additional data stream to/by the local viewer;
   - with the first wireless connection interface, so as to exchange the first data stream, or the second data stream, or the additional data stream with the remote server or with said second inner or outer connection interface;
   - a scenario-switching device functionally connected with the first microprocessor processing unit or with the second microprocessor processing unit, wherein the scenario-switching device is configured to select a data stream of interest selected between the first data stream and the second data stream, wherein the scenario-switching device is also configured to select the additional data stream as the data stream of interest, and to generate a scenario-switching signal corresponding to the data stream of interest, which include either the first data stream, or the second data stream, or the additional data stream,
   wherein a computer device selected between the first microprocessor processing unit and the server is configured to receive the scenario-switching signal and to selectively transfer only the data stream of interest responsive to the scenario-switching signal,
   - both to the local viewer;
   - and to a remote viewer,
   so that the field operator, on the local viewer, and the remote assistant, on the remote viewer, both display either an image of the first scenario or, as an alternative, an image of the second scenario, or, as an alternative, the additional data stream.

In particular, the scenario-switching device comprises a scenario-switching control means provided in a device selected from the group consisting of: the handpiece; a housing of the first microprocessor processing unit; a remote control device; a terminal associated with the remote viewer. For instance, the scenario-switching control means is a push button, and the scenario-switching device is configured in such a way to select the first data stream, or the second data stream, or the additional data stream as the data stream of interest responsive to a corresponding number of strokes given to the push button.

In an advantageous modification, the first wireless connection interface comprises:
- an external communication WiFi card configured to connect with an ambient WiFi network or host WiFi network providing an access point to the global data network, in particular to the Internet;
- an internal communication WiFi card configured to create a local WiFi network;
and the inner second connection interface comprises a further WiFi card configured to connect with the local WiFi network created by the Internal communication WiFi card. Preferably, the ambient WiFi network and the local WiFi network are configured to use different frequency bands, for example the ambient WiFi network is a 2,4 GHz network, while the local WiFi network is a 5 GHz network.

The ambient WiFi network can be a corporate network provided by the manager of a structure where the field operator is expected to operate, or it can be a public WiFi network, or even it can be a hot-spot network created by a dedicated device or a connection kit included in the first wireless connection interface of the system, said device or kit provided with a sim-card for connection to the global data network and configured to create the ambient WiFi network. As an alternative, the ambient WiFi network can be made by such a general-purpose device as a tablet, a smartphone or the like, provided by the field operator him/herself.

As an alternative, the first connection interface and the inner second connection interfaces are configured to exchange data with each other through a Bluetooth network.

However, the network architecture can be structured in a way different from what is described above, in particular, the first and the second control unit, associated with the headcam and with the handcam, respectively, can interact with each other through said first connection interface and said inner second connection interface that are configured to exchange data through a Bluetooth network. In a modification, the first and the second control unit can use a cable connection interface.

The first microprocessor processing unit can be configured to be fixed to the wearable support. As an alternative, the microprocessor processing unit can be resident on an external device, such as a smartphone or a tablet.

In an advantageous modification, the first wireless connection interface and the outer second connection interface each comprise a WiFi card configured to connect with an ambient WiFi network providing an access point to the global data network, in particular to the Internet.

Also in this case, the ambient WiFi network can be a corporate or public network, or it can be a hot-spot network created by a dedicated device or connection kit of the system that is provided with a sim-card for connection to the global data network and is configured to create the ambient WiFi network. As an alternative, the ambient WiFi network can be created by such a general-purpose device as a tablet, a smartphone or the like, provided by the field operator him/herself.

With such a network architecture, a procedure has to be run to configure the first microprocessor processing unit and the second microprocessor processing unit before the first use with a new ambient WiFi network. To this purpose, advantageously, the first and the second microprocessor processing units include respective Bluetooth connection modules and program means to receive identification data and preferably also login details of the ambient WiFi network through respective Bluetooth connections to a same ambient WiFi network.

Such a network architecture is particularly simple and, for this reason, easy to be used by the field operator, thus ensuring a high stability of the connections to the global data network and therefore to the remote server and to the remote assistant(s).

According to this architecture, both the headcam control unit and the handcam control unit directly interact with the remote server. Therefore, the second data stream generated by the handcam visual sensor reaches the viewer via the remote server, which unavoidably introduces some latency. However, even if the server is at the antipodes of the rest of the system, this latency is at most the same order of magnitude as the sum of the other typical delays of an Internet connection, i.e. time of acquisition, H264 compression time, decoding time, all in the order of some hundreds of milliseconds. In other words, the advantages of conveying the second data stream via the remote server, in both directions, normally overcomes the transmission latency drawback.

In any case, the first microprocessor processing unit and the second microprocessor processing unit can be configured to interact with each other directly through the ambient WiFi network to which they both are connected, directing the second data stream through this ambient WiFi network.

However, the network architecture can be implemented differently from what is described above, in particular the first wireless connection interface and the second connection interface, which in this case is a wireless connection interface as well, can each comprise a connection kit equipped with a sim-card for connection to the global data network.

In particular, the second microprocessor processing unit is configured to suspend an emission of the second data stream when it receives/emits the additional data stream.

The above-mentioned instrument can be any instrument for detecting/measuring physical quantities. In particular, without pretending to list all the possible applications, the instrument can be a microscope, a borescope, a thermometer, a force sensor, a stroke sensor, a concentration sensor for a chemical compound, in particular a hygrometric sensor, an illuminance sensor, an electromagnetic radiation sensor such as a radar sensor, or a combination thereof, for instance, in the form of a plurality of instruments mutually interacting through respective USB ports, or an instrument providing a plurality of functions selected among the above-mentioned ones. The instrument connected through the serial port can also be a video camera or a closed-circuit video camera system. The instrument or the instruments can be included in the system in the form the latter is made available.

Advantageously, the handpiece comprises a video-to-data conversion device associated with the serial communication port. This way, the second microprocessor processing unit can receive data from an instrument configured as a video source, in particular from a borescope or from a microscope or from a terminal of a closed-circuit video camera or video camera system.

Preferably, the handpiece, i.e. the handcam, has an elongated shape and comprises a central handle portion, configured to be grasped by the field operator, and two opposite end portions, at one of which the visual sensor is arranged, while the serial communication or USB port can be advantageously arranged at the other end portion, in order to connect further instruments and peripheral devices.

Advantageously, the system comprises a microphone and an earphone for the field operator, in particular a pair of earphones in the form of a headset, so as to enable a voice communication between the field operator and the remote assistant(s). The first microprocessor processing unit can be configured to receive/send audio signals through the microphone/earphone. As an alternative, the earphone and the microphone are configured to communicate via Bluetooth with an audio connection device configured to connect to an ambient WiFi network or directly to a global data network.

Advantageously, the first wireless connection interface is configured to:
- receive an augmented reality data stream from the remote assistant through the global data network, the augmented reality data stream comprising graphic elements related to a scenario image selected between the image of the first scenario and the image of the second scenario;
- superimpose the graphic elements on the scenario image on the local viewer.

In a modification, the first microprocessor processing unit is configured to transfer the first data stream to the local viewer, and the local viewer is configured to display an image of the first scenario to a field operator starting from the first data stream, so as to provide a see-through augmented reality video mode.

In an exemplary embodiment, the support belongs to the system in the form of a helmet or protective helmet of a type normally in use by mine or industrial plant operators, or the like, the support provided as a component of a mounting kit, together with at least one element selected among the first video camera, the local viewer, the first microprocessor processing unit and the first wireless connection interface.

In a modification, not shown, the first video camera, the local viewer, the first microprocessor processing unit and the first wireless connection interface can be integrated in a pair of "smart glasses" of known type, including the software configurations allowing the connectivity to the network, according to the above description.

### Brief description of the drawings

The invention will be now shown with the description of a few exemplary embodiments and modifications, exemplifying but not limitative, with reference to the attached drawings, in which:
- Fig. 1 is a flow chart of a system according to a first exemplary embodiment of the invention;
- Fig. 2 is a diagram showing an advantageous network architecture of the system of Fig. 1;
- Fig. 3 is a flow chart of a system according to a second exemplary embodiment of the invention;
- Fig. 4 is a diagram showing an advantageous network architecture of the system of Fig. 3;
- Fig. 5 is a front perspective view of the handpiece of the system;
- Fig. 6 is a front perspective view of the handpiece of the system, according to an exemplary embodiment thereof;
- Fig. 7 is a diagram showing the operation of a scenario-switching device for selecting a data stream of interest;
- Fig. 8 is a diagram showing a modification of the system of Fig. 3 that can be also used in the system of Fig. 1;
- Fig. 9 is a perspective view of a support on which some components of the system are mounted, in an exemplary embodiment.

### Description of preferred exemplary embodiments

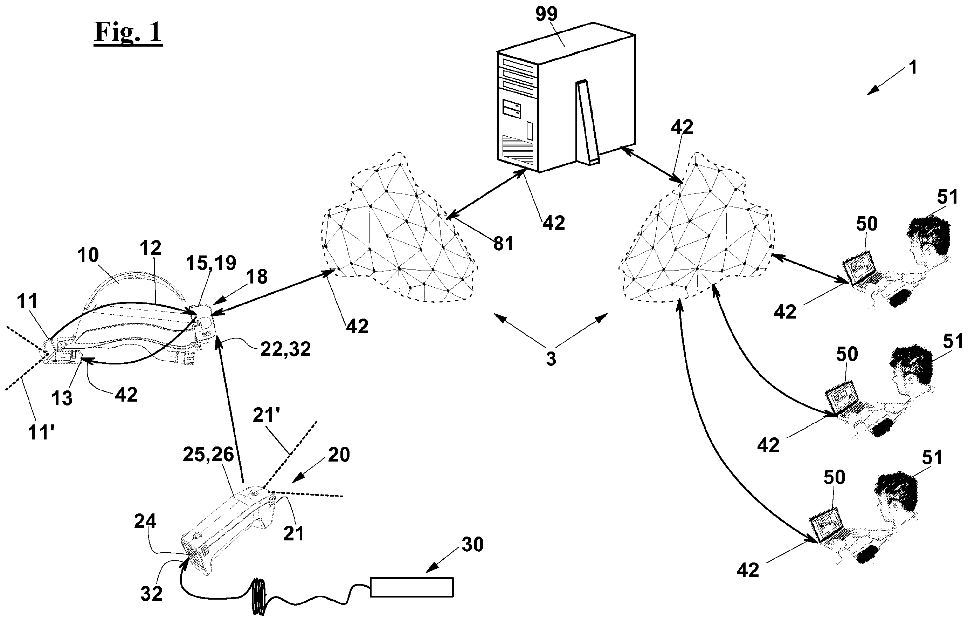

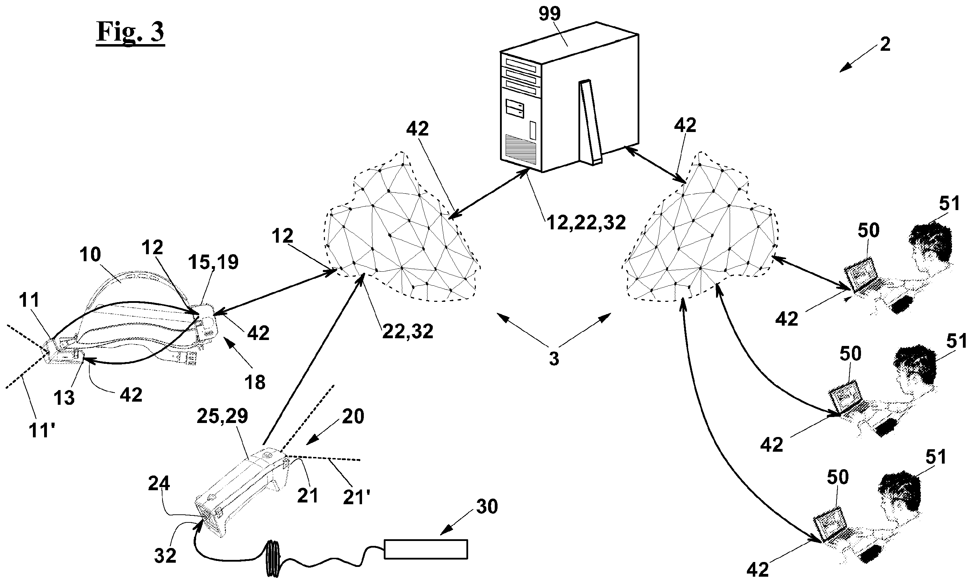

Figs. 1 and 3 show two systems 1 and 2 according to a first and second exemplary embodiments of the invention, respectively, for assisting a field operator by at least one remote assistant 51. The field operator can be a maintenance operator or a plant control operator, for example in a chemical plant, in an extractive plant, or in a mine. A field operator can be involved also when exploring an environment for scientific research, investigation, general explorative or similar reasons.

Systems 1 and 2 allow a field operator to send visual data to at least one remote assistant 51 through a global data network 3, typically through the Internet, and to ask assistant(s) 51 about the actions to be performed. Similarly, systems 1 and 2 allow assistant(s) 51 to provide instructions to a field operator in real time. The field operator and remote assistant 51 can be located everywhere, provided a terminal is available including a viewer 50 and enabling a terrestrial or satellite connection to the global data network.

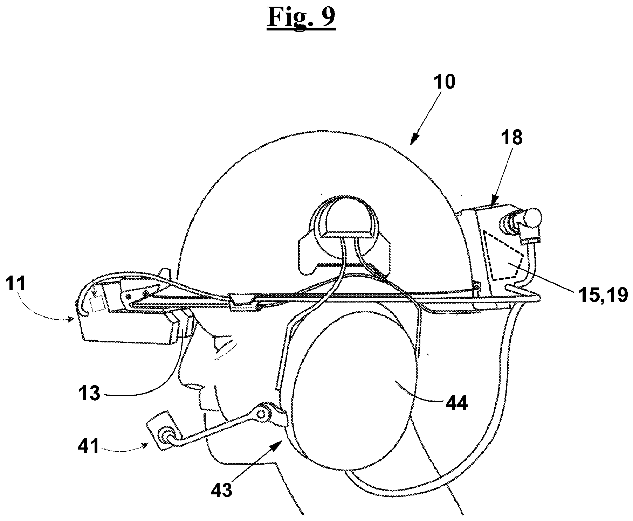

Each of systems 1 and 2 comprises a first video camera 11 equipped with all that is required to be fixed to an operator's wearable support 10, in particular, a support intended to be worn on the operator's head. For this reason, video camera 11 is also indicated as "headset" 11. As shown in Fig. 9, support 10 can be an operator's protective device such as a helmet that the operator is expected to wear while working. From its position on wearable support 10, first video camera 11 can frame a first scenario 11' with respect to support 10, which is substantially the same as the scenario the operator can see with his/her own eyes. Starting from first scenario 11', which necessarily changes as the operator moves, first video camera 11 generates a first data stream 12.

Each of systems 1 and 2 also comprises a local viewer or local display 13 configured to be positioned along an operator's line of sight, at a place where he/she can see the images on the viewer without hindering the natural vision. In particular, also local viewer 13 includes a fastening means to be fixed to wearable support 10, in a front position laterally shifted with respect to the operator's eyes, as shown, for instance, still in Fig. 9.

In order to direct data stream 12 from first video camera 11 towards local viewer 13, both system 1 and system 2 basically include a first microprocessor processing unit 15. A first wireless connection interface 19 to global data network 3 is also provided, through which first microprocessor processing unit 15 can exchange data with a remote server 99 via global data network 3. In particular, first microprocessor processing unit 15 can send first data stream 12 generated by first video camera 11 to remote server 99. The latter, in turn, is configured to direct data stream 12 to one or more remote viewers 50 available to respective remote assistants 51.

First microprocessor processing unit 15 and/or wireless connection interface 19 are advantageously housed in a same housing or box 18, which is also preferably configured to be connected to support 10. If support 10 is a protective helmet, as shown in Fig. 9, housing 18 is preferably configured to be arranged on a rear part of helmet 10.

Remote server 99 can be a part of system 1 or 2, or it can be a server of a remote assistance service provider, configured to operate according to the invention.

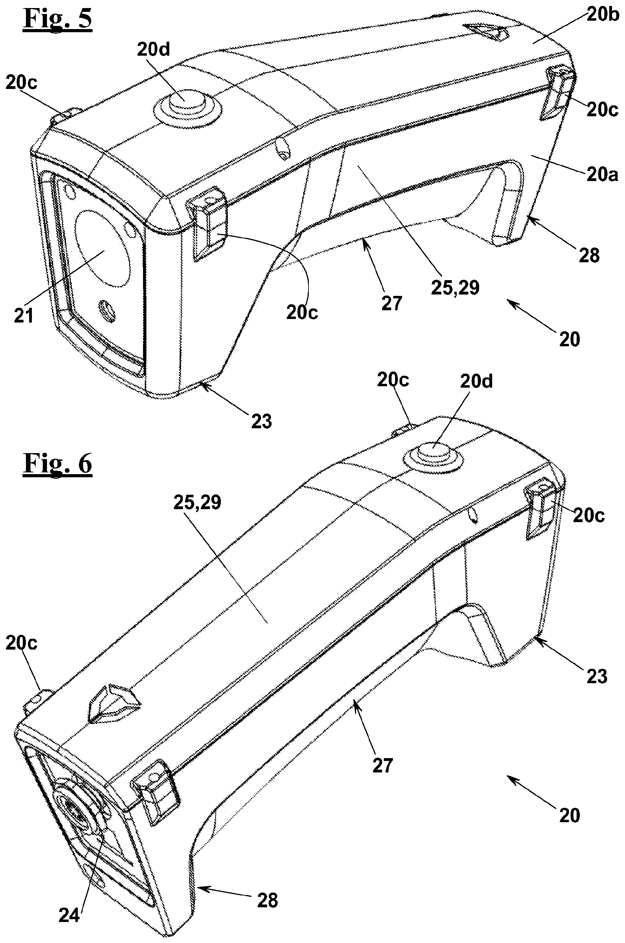

A basic component of both systems 1 and 2 is a handpiece 20, otherwise indicated as a "handcam" or "hand torch". This can have, for instance, the shape shown in Figs. 5 and 6. Handpiece 20 is a device including a visual sensor 21, and is configured to be operated by an operator's hand to take pictures and/or videos in a small environment, or in an environment that is inaccessible to the operator or to the operator's head.

Visual sensor 21 can also be a video camera, indicated as second video camera, or a thermal imaging camera, but this is not a list including all possible visual sensors 21 of handpiece 20. The second video camera and thermal imaging camera 21 can be interchangeable devices for handpiece 20, or they can be integrated in a same device, of known type, which can selectively operate as a video camera or as a thermal imaging camera, according to the needs.

In any case, visual sensor 21 can frame a second scenario 21' from handpiece 20, which is practically the scenario the operator can frame by visual sensor 21 by handling handpiece 20 and introducing his/her arm into an otherwise inaccessible environment. Starting from this second scenario 21', which necessarily changes as the operator moves his/her arm and hand by which he/she grips handpiece 20, visual sensor 21 generates a second data stream 22.

Another use of handpiece 20 can consist in arranging it in a remote position from the field operator, in order to frame a scenario and to take a picture thereof in an environment where the operator same it is not allowed or safe to stay for a long time, or to frame the field operator him/herself while he/she is operating as required, in order to be visible to remote assistant 51 during this operation.

According to a first exemplary embodiment of the invention, in order to manage second data stream 22 generated by visual sensor 21, system 1 and system 2 provide a second microprocessor processing unit 25 and an inner second connection interface 26 or an outer second connection interface 29.

In the case of system 1 of Fig. 1, inner second connection interface 26 is configured to connect second microprocessor processing unit 25 with first microprocessor processing unit 15, while in the case of system 2 of Fig. 3, outer second connection interface 29 is configured to connect second microprocessor processing unit 25 with remote server 99 through global data network 3, in which case an outer connection interface 29 is necessarily required.

Second microprocessor processing unit 25 and inner or outer second connection interface 26,29 are also configured to receive and forward, besides data stream 22, an additional data stream 32 generated by a further possible peripheral device 30 connected to handpiece 20. This peripheral device 30 can comprise various instruments and sensors, or it can be an outlet device of a further closed-circuit video camera or of a video camera closed-circuit environmental imaging system, in particular, to take pictures of an apparatus to be supervised.

To this purpose, handpiece 20 can comprise a serial communication port 24, for example in the form of a USB port or the like, as shown, for instance, in Fig. 6.

Examples of possible instruments 30 that can be connected to handpiece 20 through serial communication port 24 include microscopes, borescopes, thermometers, force sensors, stroke sensors, chemical concentration sensors such as hygrometric sensors, illuminance sensors, electromagnetic radiation sensors of various type such as radar sensors, or instruments providing these functions together. Instruments 30 can be a part of the system.

Handpiece 20 can also comprise a video-to-data conversion device associated with serial communication port 24, so as to receive data from sensor 30, typically from a borescope or from a microscope, or from a different peripheral device configured as a video source, for example, a terminal of a further closed-circuit video camera or of a closed-circuit video camera network.

Each instrument or sensor 30 is normally configured to measure a physical quantity, in the case of microscopes and borescopes the physical quantities being image parameters, and to generate additional data stream 32 starting from the measured quantity.

Therefore, second microprocessor processing unit 25 is functionally connected to serial communication port 24 through which it can receive additional data stream 32. This way, second microprocessor processing unit 25 can transfer additional data stream 32 in the same way it transfers second data stream 22, through second connection interface 26 or 29:
- in the case of system 1 according to the first exemplary embodiment, to first wireless connection interface 19, and from here
   - to local viewer 13 and,
   - to remote viewer(s) 50, through global data network 3 and remote server 99;
- in the case of system 2 according to the second exemplary embodiment, directly to server 99 through global data network 3, and from here
   - to local viewer 13 through global data network 3 and first wireless connection interface 19, and from here
   - to remote viewer(s) 50 through global data network 3 and remote server 99.

Second microprocessor processing unit 25 is preferably configured to suspend the transmission of second data stream 22 coming from visual sensor 21 when, during or immediately after a measure carried out by instrument 30, it receives/emits additional data stream 32, and vice-versa.

More in detail, in the case of system 1 of Fig. 1, first microprocessor processing unit 15 is functionally connected also with inner second connection interface 26 of handpiece 20, typically through first wireless connection interface 19. First microprocessor processing unit 15 is therefore configured to receive second data stream 22 and additional data stream 32 and to transfer data streams 22 and 32 to local viewer 13. This way, local viewer 13 can display an image of second scenario 21' framed by visual sensor 21, or a representation of the data obtained from instrument or sensor or peripheral device 30, which can therefore be seen by the field operator.

Owing to its connection with inner second connection interface 26 of handpiece 20, first microprocessor processing unit 15 is also configured to transfer second data stream 22 and additional data stream 32 to server 99 via global data network 3, as well as first data stream 12. As in the case of first data stream 12, server 99 is configured to direct second data stream 22 or additional data stream 32 to at least one remote viewer 50. This makes it possible to display second scenario 21', as well as the data obtained from any peripheral device 30, to remote assistant(s) 51.

Instead, as anticipated, in the case of system 2 according to the second exemplary embodiment of the invention, in order to manage second data stream 22 generated by visual sensor 21 and additional data stream 32 generated by any peripheral device 30 connected to handpiece 20, system 2 of Fig. 3 comprises, besides second microprocessor processing unit 25, an outer second wireless connection interface 29 configured to connect second microprocessor processing unit 25 directly with global data network 3, in order to send second data stream 22 and additional data stream 32 coming from handpiece 20 to remote server 99, and to display second scenario 21' and instrument data to remote assistant(s) 51 connected to server 99 through respective local viewer(s) 50.

First data stream 12 can be sent to viewer 50 of remote assistant(s) 51 in a way similar to system 1 of the first exemplary embodiment of Fig. 1.

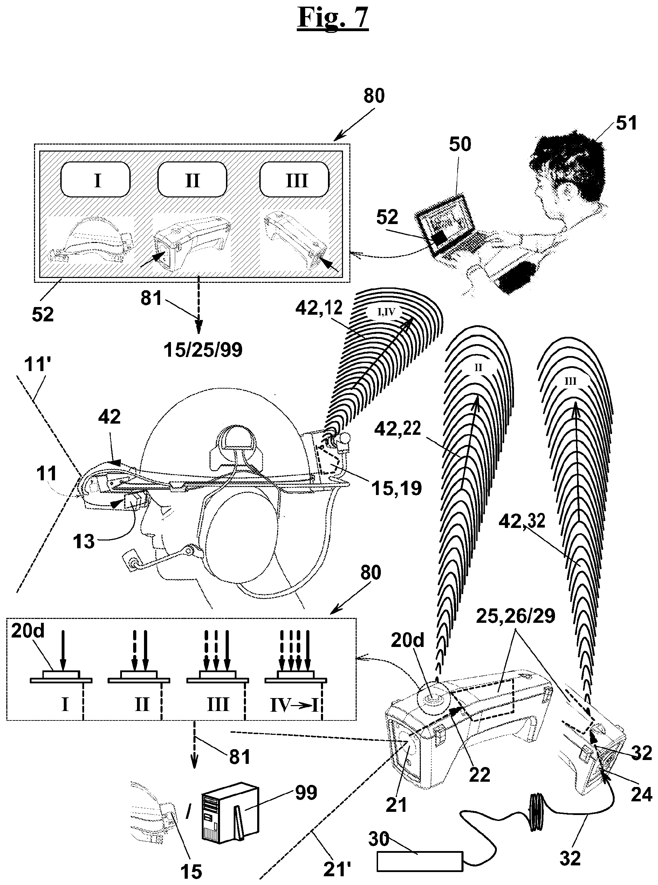

System 1 or 2 also includes a scenario-switching device 80 diagrammatically shown in Fig. 7 and functionally connected with first microprocessor processing unit 15 or with second microprocessor processing unit 25. Scenario-switching device 80 comprises one or several control elements 20d,52 configured to define a data stream of interest 42 selected among first data stream 12, second data stream 22 and additional data stream 32, and to generate a corresponding scenario-switching signal 81 for a logical unit of the system, i.e. for first or second microprocessor processing unit 15,25, or for remote server 99, said logical unit configured to direct data stream of interest 42 to both local viewer 13 and remote viewer(s) 50.

More in detail, in the first exemplary embodiment of Fig. 1, first microprocessor processing unit 15 is configured to receive scenario-switching signal 81 and to transfer accordingly only first data stream 12 or only second data stream 22 or only additional data stream 32 to both local viewer 13 and first wireless connection interface 19, and therefore to server 99 through global data network 3, so that both the field operator and remote assistant 51, connected to server 99 through global data network 3 by remote viewer 50, display at the same time either an image of first scenario 11' generated by first video camera 11 or, as an alternative, an image of second scenario 21' generated by visual sensor 21, or, as an alternative, the data generated by further peripheral device 30, on local viewer 13 and on remote viewer 50, respectively.

Instead, in the second exemplary embodiment of Fig. 3, server 99 is configured to receive scenario-switching signal 81 and, according to this signal, to transfer only first data stream 12 or only second data stream 22 or only additional data stream 32 to both remote viewer 50 and first wireless connection interface 19, through global data network 3, and therefore to first microprocessor processing unit 15 and from here to local viewer 13, so that both the field operator and remote assistant 51, connected to server 99 through global data network 3 by remote viewer 50, display at the same time either an image of first scenario 11' generated by first video camera 11 or, as an alternative, an image of second scenario 21' generated by visual sensor 21, or, as an alternative, the data obtained from further peripheral device 30 on local viewer 13 and on remote viewer 50, respectively.

In an exemplary embodiment, scenario-switching device 80 comprises a push button 20d or an equivalent control means, preferably arranged on handpiece 20, as shown in Figs. 5 and 6. However, this push button or equivalent control means can also be arranged on a dedicated remote-control device, not shown, or on housing 18 of first microprocessor processing unit 15.

In particular, as shown in Fig. 7, push button 20d can be configured in such a way to select said first data stream 12, said second data stream 22 and said additional data stream 32 responsive to a corresponding number of strokes given to said push button 20d, for example it can be configured to select first data stream 12 by one stroke, second data stream 22 by a second stroke and additional data stream 32 by a third stroke, while with a fourth, a fifth, a sixth... stroke, this switch sequence is repeated.

As an alternative, scenario-switching device 80 can be configured to be operated through an external device such as a smartphone or a tablet.

Similarly, as shown in Fig. 7, a scenario-switching control means 52 of scenario-switching device 80 can be available also to remote assistant 51, for instance, in the form of a push button or an area of a display of viewer 50.

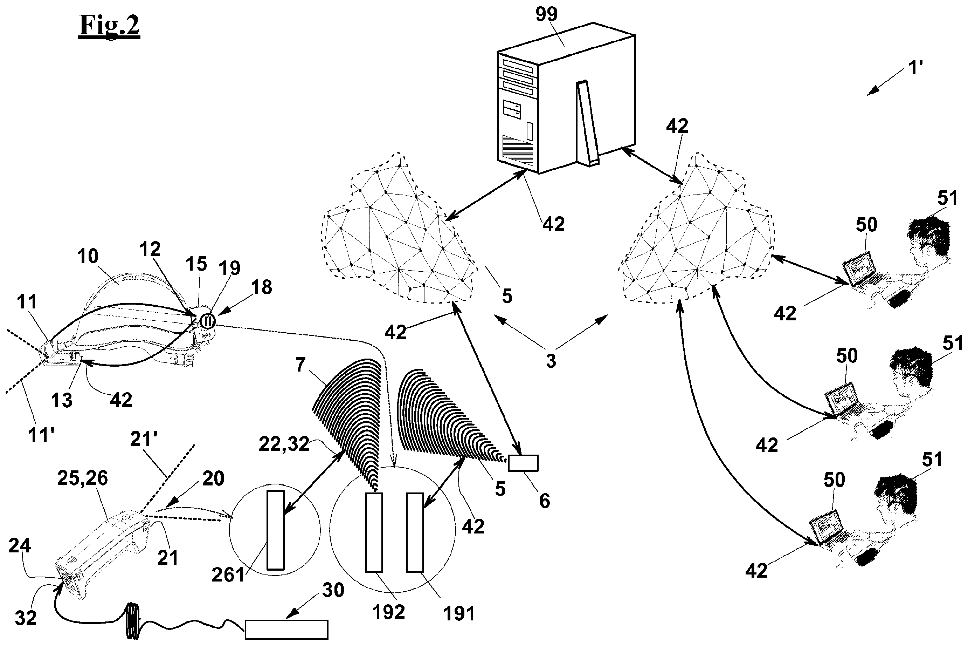

The network architecture used by system 1' according to a preferred modification of the first exemplary embodiment of Fig. 1 will be now described more in detail with reference to Fig. 2.

In this modification, first wireless connection interface 19 comprises an external communication WiFi card 191 configured to connect with an ambient WiFi network 5, in particular a 2,4 GHz network, which provides an access point 6 to global data network 3, in particular, to the Internet. First wireless connection interface 19 also comprises an internal communication WiFi card 192 configured to create a local WiFi network 7, in particular a 5 GHz network. This way, first data stream 12 can be directed from first wireless connection interface 19 to global data network 3 through external communication WiFi card 191, ambient WiFi network 5 and access point 6.

In the same modification, inner second connection interface 26 comprises a further WiFi card 261 configured to connect with local WiFi network 7 created by internal communication WiFi card 192. This way, second data stream 22 and additional data stream 32 can reach first wireless connection interface 19 through local WiFi network 7. From first wireless connection interface 19, second data stream 22 and additional data stream 32 can be sent to global data network 3 through external communication WiFi card 191, ambient WiFi network 5 and access point 6, similarly to first data stream 12. Moreover, second data stream 22 and additional data stream 32 can reach viewer 13 through a cable data connection between first wireless connection interface 19 and viewer 13.

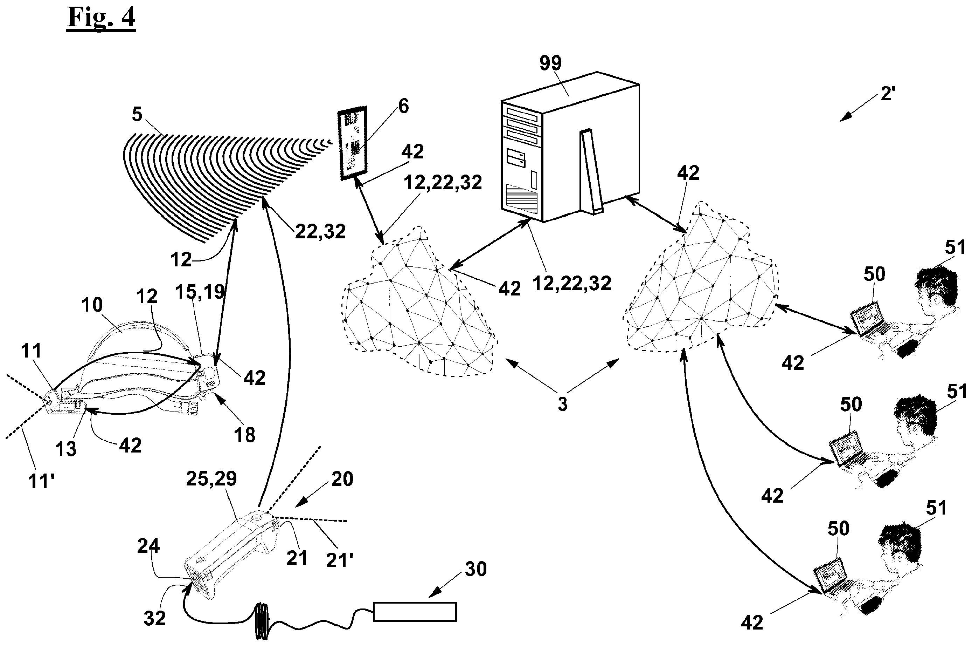

The network architecture used by system 2' according to a preferred modification of the second exemplary embodiment of Fig. 3 will be now described more in detail with reference to Fig. 4.

In this modification, first wireless connection interface 19 and outer second wireless connection interface 29 each comprise a WiFi card, not shown, configured to connect with an ambient WiFi network 5 providing an access point 6 to global data network 3, in particular, to the Internet.

Both in the case of system 1' according to the first exemplary embodiment and in the case of system 2' according to the second exemplary embodiment, ambient WiFi network 5 can be a corporate WiFi network or a public WiFi network. As an alternative, as shown in Fig. 2, ambient WiFi network 5 can be a hot-spot network created by a dedicated device or connection kit included in first interface 15 of the system, said device provided with a sim-card for connection to the global data network and configured to create ambient WiFi network 5. As an alternative, shown in Fig. 4, ambient WiFi network 5 can be made by a general communication device as a tablet, a smartphone or an equivalent device.

In a further modification, not shown, first wireless connection interface 19 and/or outer second wireless connection interface 29 comprises a connection kit provided with a sim-card for connection to global data network 3.

With reference to Fig. 5, handpiece 20 of systems 1,1' of Figs. 1 and 2 or of systems 2,2' of Figs. 3 and 4 preferably has an elongated shape, with a central handle portion 27 configured to be grasped by the field operator, and two opposite end portions 23,28. Preferably, as shown, a housing is provided at first end portion 23 in which visual sensor 21 is arranged, with an optical axis oriented along a longitudinal direction of elongated handpiece 20. Serial communication port 24 is preferably but not exclusively arranged at an end portion 28 opposite to end portion 23 of handpiece 20, i.e. opposite to visual sensor 21.

To include components 21,25 and 26 or 29, handpiece 20 can comprise a box consisting of a container 20 and a cover 20b, preferably separable from each other and fixed to each other by means of fastening elements 20c preferably arranged along both sides of handpiece 20.

As anticipated, handpiece 20 advantageously comprises a control element of the scenario-switching device to select the image, i.e. the data, to be displayed on local viewer 13 and on remote viewer(s) 50, in particular to select which data stream has to be used to form this image, among first data stream 12 related to the scenario framed by first video camera 11, second data stream 22 related to the scenario framed by visual sensor 21, and additional data stream 32 coming from further peripheral device or instrument 30 via serial connection port 24 of handpiece 20. In a handpiece advantageously including a thermal imaging camera or a video camera as the visual sensor 21, the switching device can also be configured to select the data stream to form the image among first data stream 12 generated by first video camera 11, second data stream 22 generated by a thermal imaging camera provided as the visual sensor 21, second data stream 22 generated by a thermal imaging camera provided as the visual sensor 21, and additional data stream 32.

As anticipated, a push button 20d can be provided on the outer surface of handpiece 20 as the control element of scenario-switching device 80, more in particular, push button 20d can protrude from cover 20b, as shown in Figs. 5 and 6. Scenario-switching device 80 can be configured in such a way that, by repeatedly stroking push button 20d, the selected data stream switches from first data stream 12, to second data stream 22 and to additional data stream 32, or from first data stream 12, to second data stream 22 of video camera, to second data stream 22 of thermal imaging camera and to additional data stream 32. Obviously, as an alternative, the data stream of the thermal imaging camera and the data stream of the video camera can be selected by a push button different from push button 20d of scenario-switching device 80.

As shown in Fig. 9, the system can comprise also a microphone 41 and an earphone 44, in particular a couple of earphones 44, for example in the form of a headset 43, in order to establish a voice communication between the field operator and remote assistant(s) 51. In the exemplary embodiment of Fig. 9, first microprocessor processing unit 15 is connected to microphone 41 and to earphone 44, so as to receive/send audio signals from microphone 41 / to earphone 44. In a modification, not shown, earphone 44 and microphone 41 are configured to communicate via Bluetooth with an audio connection device configured to connect to an ambient WiFi network or directly to a global data network, for example a tablet or a smartphone.

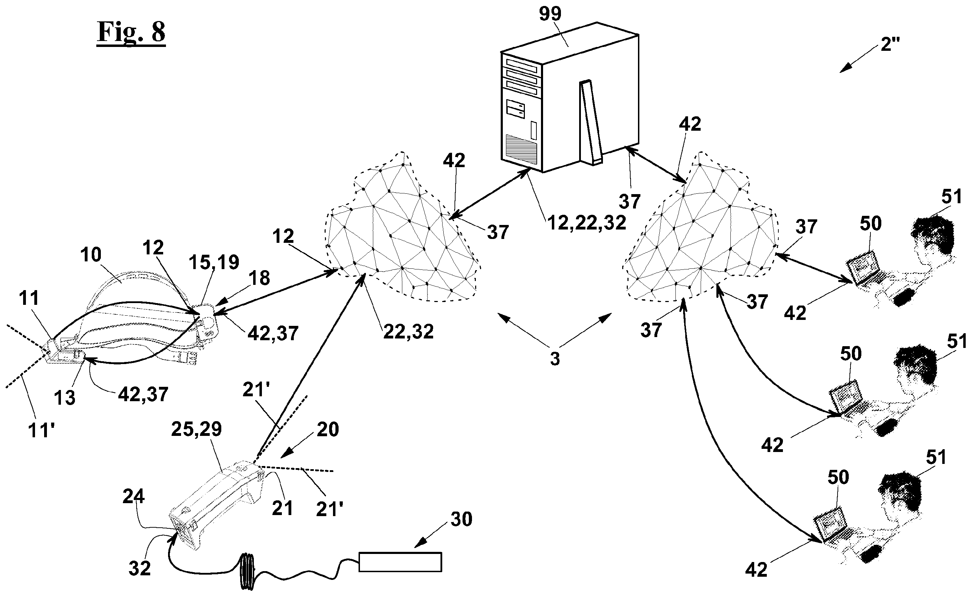

As shown in Fig. 8, systems 1 and 2 of Figs. 1 and 3 can also be configured to receive an augmented reality data stream 37 conventionally produced by a remote assistant 51, and to associate augmented reality data stream 37 to first data stream 12 or to second data stream 22 when this is respectively sent to viewer 13, so that augmented reality graphic signs are presented to a field operator to highlight details of first or second scenario 21', along with the images of first or second scenario 21', respectively.

System 2" shown in Fig. 8 is a modification of system 2 of Fig. 2. However, the invention also includes a corresponding modification, not shown, of system 1 of Fig. 1, which can be implemented in a way similar and apparent for a skilled person.

To this purpose, first wireless connection interface 19 is configured to receive the augmented reality data stream 37 and to transfer it to first microprocessor processing unit 15, which manages the data streams directed to viewer 13. In the above-mentioned modification, not shown, of system 1 of Fig. 1, first microprocessor processing unit 15 is configured to conventionally associate augmented reality data stream 37 at least to second data stream 22 directed to viewer 13, superimposing the augmented reality graphic signs to the image of second scenario 21' framed by visual sensor 21 of handpiece 20. Similarly, in system 2" of Fig. 8, first microprocessor processing unit 15 and/or server 99 are configured to conventionally associate the augmented reality data stream 37 at least to second data stream 22 directed to viewer 13, superimposing the augmented reality graphic signs to the image of second scenario 21' framed by visual sensor 21 of handpiece 20.

In particular, in a further modification of systems 1 and 2, first microprocessor processing unit 15 is configured to transfer also first data stream 12 to local viewer 13, related to the image of first scenario 11' framed by first video camera 11, and first microprocessor processing unit 15 and/or server 99 are configured to conventionally associate the augmented reality data stream 37 also to first data stream 12 directed to viewer 13, superimposing the augmented reality graphic signs to the image of first scenario 11' framed by first video camera 11, implementing a see-through augmented reality video mode.

Both system 1 of Fig. 1 and system 2 of Fig. 2 can be provided in the form of a mounting kit including helmet or protective helmet 10 and at least one element among first video camera 11, local viewer 13, first microprocessor processing unit 15 and first wireless connection interface 19, as shown in Fig. 9.

The foregoing description of exemplary embodiments and modifications of the invention will so fully reveal the invention according to the conceptual point of view, so that others, by applying current knowledge, will be able to modify and/or adapt in various applications these exemplary embodiments and modifications without further research and without parting from the invention, and, accordingly, it is meant that such adaptations and modifications will have to be considered as equivalent to an exemplary embodiments of the invention and of the respective modifications. The means and the materials to put into practice the different functions described herein could have a different nature without, for this reason, departing from the field of the invention. It is to be understood that the phraseology or terminology employed herein is for the purpose of description and not of limitation.

## Claims

1. A system (1,1',2,2',2") for assisting a field operator by a remote assistant (51), said system comprising:
- a first video camera (11) configured:
- to be fixed on a support (10) wearable on said field operator's head;
- to frame a first scenario (11') from said support (10);
- to generate a first data stream (12) related to said first scenario (11');
- a local viewer (13) configured to be fixed to said wearable support (10) and to be positioned along a line of sight of said field operator;
- a first microprocessor processing unit (15) configured to be fixed on said wearable support (10);
- a first wireless connection interface (19) to a global data network (3), configured to be fixed to said wearable support (10) and to exchange data with a remote server (99) through said global data network (3);
- a handpiece (20) comprising:
- a visual sensor (21) configured:
- to frame a second scenario (21') from said handpiece (20);
- to generate a second data stream (22) related to said second scenario (21');
- a serial communication port (24) to connect an instrument (30), said serial communication port (24) configured to receive an additional data stream (32) from said instrument (30);
- a second microprocessor processing unit (25);
- a second connection interface (26,29) selected between:
- an inner second connection interface (26) between said second microprocessor processing unit (25) and said first microprocessor processing unit (15);
- an outer second connection interface (29) to said global data network (3), configured to exchange data with said remote server (99) through said global data network (3),
wherein said second microprocessor processing unit (25) is functionally connected:
- with said visual sensor (21), so as to receive said second data stream (22);
- with said second connection interface (26,29), so as to emit said second data stream (22),
- with said serial communication port (24), so as to receive said additional data stream (32), such that said second connection interface (26, 29) can also emit said additional data stream (32),
wherein said first microprocessor processing unit (15) is functionally connected:
- with said first video camera (11), so as to receive said first data stream (12);
- with said inner second connection interface (26) or with said outer second connection interface (29) of said handpiece (20) through said remote server (99) and through said global data network (3), so as to receive said second data stream (22) or said additional data stream (32);
- with said local viewer (13), so as to transfer and remotely display said second data stream (22) or said additional data stream (32) to/by said local viewer (13);
- with said first wireless connection interface (19), so as to exchange said first data stream (12), or said second data stream (22), or said additional data stream (32) with said remote server (99) or with said second inner or outer connection interface (26,29);
- a scenario-switching device (80) functionally connected with said first microprocessor processing unit (15) or with said second microprocessor processing unit (25), wherein said scenario-switching device (80) is configured to select a data stream of interest (42) selected between said first data stream (12) and said second data stream (22), and said additional data stream (32), and to generate a scenario-switching signal (81) corresponding to said data stream of interest (42), which includes either only said first data stream (12), or only said second data stream (22), or only said additional data stream (32), wherein the system comprises a computer device selected between said first microprocessor processing unit (15) and said server (99) and configured to receive said scenario-switching signal (81) and to selectively transfer said data stream of interest (42) responsive to said scenario-switching signal (81)
- both to said local viewer (13);
- and to a remote viewer (50),
so that said field operator, on said local viewer (13), and said remote assistant (51), on said remote viewer (50), both display:
- either an image of said first scenario (11');
- or, as an alternative, an image of said second scenario (21');
- or, as an alternative, said additional data stream.

2. The system according to claim 1, wherein said scenario-switching device (80) comprises a scenario-switching control means (20d) provided in a device that is comprised in the system and is selected from the group consisting of:
- said handpiece (20);
- a housing (18) of said first microprocessor processing unit (15);
- a remote control device;
- a terminal associated with said remote viewer (50).

3. The system according to claim 2, wherein said scenario-switching control means is a push button (20d), and said scenario-switching device is configured in such a way to select said first data stream (12), said second data stream (22) and said additional data stream (32) as said data stream of interest by a predetermined number of strokes given to said push button (20d).

4. The system (1') according to claim 1, wherein:
- said first wireless connection interface (19) comprises:
- an external communication WiFi card (191) configured to connect with an ambient WiFi network (5) providing an access point (6) to said global data network (3); and
- an internal communication WiFi card (192) configured to create a local WiFi network (7);
- said inner second connection interface (26) comprises a further WiFi card (261) configured to connect with said local WiFi network (7) created by said internal communication WiFi card (192).

5. The system (1') according to claim 4, wherein said ambient WiFi network (5) and said local WiFi network (7) are configured to use different frequency bands.

6. The system (1') according to claim 4, wherein said first wireless connection interface (19) comprises a connection kit provided with a sim-card for connection to said global data network (3) and configured to create said ambient WiFi network (5).

7. The system (2') according to claim 1, wherein said first wireless connection interface (19) and said outer second connection interface (29) each comprise a respective device selected from the group consisting of:
- a WiFi card configured to connect with an ambient WiFi network (5) providing an access point (6) to said global data network (3);
- a connection kit provided with a sim-card for connection to said global data network (3).

8. The system according to claim 1, wherein said visual sensor (21) is selected from the group consisting of:
- a second video camera;
- a thermal imaging camera;
- an integrated visual sensor selectively providing the operations of a video camera and of a thermal imaging camera.

9. The system according to claim 1, wherein said second microprocessor processing unit (25) is configured to suspend an emission of said second data stream (22) when it receives/emits said additional data stream (32).

10. The system according to claim 1, further comprising said instrument (30), which is selected from the group consisting of:
- a microscope;
- a borescope;
- a thermometer;
- a force sensor;
- a stroke sensor;
- a concentration sensor for a chemical compound;
- a hygrometric sensor;
- an illuminance sensor;
- an electromagnetic radiation sensor;
- at least one video camera of a closed-circuit environmental imaging system;
- a combination thereof.

11. The system according to claim 1, wherein said handpiece 20 comprises a video-to-data conversion device associated with said serial communication port (24), such that said second microprocessor processing unit (25) can receive data from said instrument (30) configured as a video source.

12. The system according to claim 1, wherein said handpiece (20) has an elongated shape and comprises:
- a central handle portion (27) configured to be grasped by said field operator;
- two opposite end portions (26,28), wherein said visual sensor (21) is arranged in a first end portion (23) of said opposite end portions (23,28).

13. The system (2") according to claim 1, wherein said first wireless connection interface (19) is configured to:
- receive an augmented reality data stream (37) from said remote assistant (51) through said global data network (3), said augmented reality data stream (37) comprising graphic elements related to a scenario image selected between said image of said first scenario (11') and said image of said second scenario (21');
- superimpose said graphic elements on said scenario image on said local viewer (13).

14. The system according to claim 13, wherein said first microprocessor processing unit (15) is configured to transfer said first data stream (12) to said local viewer (13), said local viewer (13) configured to display an image of said first scenario (11') to said field operator starting from said first data stream (12), so as to provide a see-through augmented reality video mode.

15. The system according to claim 1, comprising said support in the form of a helmet (10) or protective helmet, wherein said helmet (10) or protective helmet and at least one element selected among said first video camera (11), said local viewer (13), said first microprocessor processing unit (15) and said first wireless connection interface (19) are provided in the form of a mounting kit.

## Patentansprüche

1. System (1, 1', 2, 2', 2 ") zum Unterstützen eines Mitarbeiters vor Ort durch einen Fernassistenten (51), wobei das System Folgendes umfasst:
- eine erste Videokamera (11), die dazu konfiguriert ist:
- auf einer Stütze (10) befestigt zu sein, die auf dem Kopf des Mitarbeiters vor Ort tragbar ist;
- ein erstes Szenario (11') von der Stütze (10) aus zu bilden;
- einen ersten Datenstrom (12) zu erzeugen, der sich auf das erste Szenario (11') bezieht;
- eine lokale Betrachtungseinrichtung (13), die dazu konfiguriert ist, an der tragbaren Stütze (10) befestigt und entlang einer Sichtlinie des Mitarbeiters vor Ort positioniert zu sein;
- eine erste Mikroprozessorverarbeitungseinheit (15), die dazu konfiguriert ist, an der tragbaren Stütze (10) befestigt zu sein;
- eine erste drahtlose Verbindungsschnittstelle (19) zu einem globalen Datennetzwerk (3), die dazu konfiguriert ist, an der tragbaren Stütze (10) befestigt zu sein und Daten mit einem Remote-Server (99) über das globale Datennetzwerk (3) auszutauschen;
- ein Handstück (20), das Folgendes umfasst:
- einen visuellen Sensor (21), der zu Folgendem konfiguriert ist:
- Bilden eines zweiten Szenarios (21') von dem Handstück (20) aus;
- Erzeugen eines zweiten Datenstroms (22), der sich auf das zweite Szenario (21') bezieht;
- einen seriellen Kommunikationsanschluss (24) zum Verbinden eines Instruments (30), wobei der serielle Kommunikationsanschluss (24) dazu konfiguriert ist, einen zusätzlichen Datenstrom (32) von dem Instrument (30) zu empfangen;
- eine zweite Mikroprozessorverarbeitungseinheit (25);
- eine zweite Verbindungsschnittstelle (26, 29), ausgewählt aus:
- einer inneren zweiten Verbindungsschnittstelle (26) zwischen der zweiten Mikroprozessorverarbeitungseinheit (25) und der ersten Mikroprozessorverarbeitungseinheit (15);
- einer äußeren zweiten Verbindungsschnittstelle (29) zu dem globalen Datennetzwerk (3), die dazu konfiguriert ist, Daten mit dem Remote-Server (99) über das globale Datennetzwerk (3) auszutauschen,
wobei die zweite Mikroprozessorverarbeitungseinheit (25) funktionell verbunden ist:
- mit dem visuellen Sensor (21), um den zweiten Datenstrom (22) zu empfangen;
- mit der zweiten Verbindungsschnittstelle (26, 29), um den zweiten Datenstrom (22) auszusenden,
- mit dem seriellen Kommunikationsanschluss (24), um den zusätzlichen Datenstrom (32) zu empfangen, sodass die zweite Verbindungsschnittstelle (26, 29) auch den zusätzlichen Datenstrom (32) aussenden kann,
wobei die erste Mikroprozessorverarbeitungseinheit (15) funktionell verbunden ist:
- mit der ersten Videokamera (11), um den ersten Datenstrom (12) zu empfangen;
- mit der inneren zweiten Verbindungsschnittstelle (26) oder mit der äußeren zweiten Verbindungsschnittstelle (29) des Handstücks (20) über den Remote-Server (99) und über das globale Datennetzwerk (3), um den zweiten Datenstrom (22) oder den zusätzlichen Datenstrom (32) zu empfangen;
- mit der lokalen Betrachtungseinrichtung (13), um den zweiten Datenstrom (22) oder den zusätzlichen Datenstrom (32) zu der/durch die lokale Betrachtungseinrichtung (13) zu übertragen und aus der Ferne anzuzeigen;
- mit der ersten drahtlosen Verbindungsschnittstelle (19), um den ersten Datenstrom (12) oder den zweiten Datenstrom (22) oder den zusätzlichen Datenstrom (32) mit dem Remote-Server (99) oder mit der zweiten inneren oder äußeren Verbindungsschnittstelle (26, 29) auszutauschen;
- eine Szenario-Umschaltvorrichtung (80), die funktionell mit der ersten Mikroprozessorverarbeitungseinheit (15) oder mit der zweiten Mikroprozessorverarbeitungseinheit (25) verbunden ist, wobei die Szenario-Umschaltvorrichtung (80) dazu konfiguriert ist, einen Datenstrom von Interesse (42) auszuwählen, der aus dem ersten Datenstrom (12) und dem zweiten Datenstrom (22) und dem zusätzlichen Datenstrom (32) ausgewählt wird, und ein Szenario-Umschaltsignal (81) zu erzeugen, das dem Datenstrom von Interesse (42) entspricht, der entweder nur den ersten Datenstrom (12) oder nur den zweiten Datenstrom (22) oder nur den zusätzlichen Datenstrom (32) enthält,
wobei das System eine Computervorrichtung umfasst, die aus der ersten Mikroprozessorverarbeitungseinheit (15) und dem Server (99) ausgewählt und dazu konfiguriert ist, das Szenario-Umschaltsignal (81) zu empfangen und den Datenstrom von Interesse (42) als Reaktion auf das Szenario-Umschaltsignal (81) selektiv zu übertragen
- sowohl an die lokale Betrachtungseinrichtung (13);
- als auch an eine Fernbetrachtungseinrichtung (50),
so dass der Mitarbeiter vor Ort auf der lokalen Betrachtungseinrichtung (13) und der Fernassistent (51) auf der Fernbetrachtungseinrichtung (50) beide Folgendes anzeigen:
- entweder ein Bild des ersten Szenarios (11');
- oder als Alternative ein Bild des zweiten Szenarios (21');
- oder als Alternative den zusätzlichen Datenstrom.

2. System nach Anspruch 1, wobei die Szenario-Umschaltvorrichtung (80) ein Szenario-Umschaltsteuerungsmittel (20d) umfasst, das in einer Vorrichtung bereitgestellt ist, die in dem System umfasst ist und ausgewählt ist aus der Gruppe bestehend aus:
- dem Handstück (20);
- einem Gehäuse (18) der ersten Mikroprozessorverarbeitungseinheit (15);
- einer Fernsteuerungsvorrichtung;
- einem Endgerät, das der Fernbetrachtungseinrichtung (50) zugeordnet ist.

3. System nach Anspruch 2, wobei das Szenario-Umschaltsteuerungsmittel ein Drucktaster (20d) ist und die Szenario-Umschaltvorrichtung so konfiguriert ist, dass der erste Datenstrom (12), der zweite Datenstrom (22) und der zusätzliche Datenstrom (32) als der Datenstrom von Interesse durch eine vorbestimmte Anzahl von Betätigungen des Drucktasters (20d) auswählt wird.

4. System (1') nach Anspruch 1, wobei:
- die erste drahtlose Verbindungsschnittstelle (19) Folgendes umfasst:
- eine externe WiFi-Kommunikationskarte (191), die dazu konfiguriert ist, sich mit einem Umgebungs-WiFi-Netzwerk (5) zu verbinden, das einen Zugangspunkt (6) zu dem globalen Datennetzwerk (3) bereitstellt; und
- eine interne WiFi-Kommunikationskarte (192), die dazu konfiguriert ist, ein lokales WiFi-Netzwerk (7) zu erstellen;
- die innere zweite Verbindungsschnittstelle (26) eine weitere WiFi-Karte (261) umfasst, die dazu konfiguriert ist, sich mit dem lokalen WiFi-Netzwerk (7) zu verbinden, das durch die interne WiFi-Kommunikationskarte (192) erstellt wird.

5. System (1') nach Anspruch 4, wobei das Umgebungs-WiFi-Netzwerk (5) und das lokale WiFi-Netzwerk (7) dazu konfiguriert sind, unterschiedliche Frequenzbänder zu verwenden.

6. System (1') nach Anspruch 4, wobei die erste drahtlose Verbindungsschnittstelle (19) ein Verbindungsset umfasst, das mit einer SIM-Karte zur Verbindung mit dem globalen Datennetzwerk (3) versehen und dazu konfiguriert ist, das Umgebungs-WiFi-Netzwerk (5) zu erstellen.

7. System (2') nach Anspruch 1, wobei die erste drahtlose Verbindungsschnittstelle (19) und die äußere zweite Verbindungsschnittstelle (29) jeweils eine jeweilige Vorrichtung umfassen, ausgewählt aus der Gruppe bestehend aus:
- einer WiFi-Karte, die dazu konfiguriert ist, sich mit einem Umgebungs-WiFi-Netzwerk (5) zu verbinden, das einen Zugangspunkt (6) zu dem globalen Datennetzwerk (3) bereitstellt;
- einem Verbindungsset, das mit einer SIM-Karte zur Verbindung mit dem globalen Datennetzwerk (3) versehen ist.

8. System nach Anspruch 1, wobei der visuelle Sensor (21) aus der Gruppe ausgewählt ist, die aus Folgendem besteht:
- einer zweiten Videokamera;
- einer Wärmebildkamera;
- einem integrierten visuellen Sensor, der selektiv die Operationen einer Videokamera und einer Wärmebildkamera bereitstellt.

9. System nach Anspruch 1, wobei die zweite Mikroprozessorverarbeitungseinheit (25) dazu konfiguriert ist, eine Aussendung des zweiten Datenstroms (22) auszusetzen, wenn sie den zusätzlichen Datenstrom (32) empfängt/aussendet.

10. System nach Anspruch 1, ferner umfassend das Instrument (30), das aus der Gruppe ausgewählt ist, die aus Folgendem besteht:
- einem Mikroskop;
- einem Boreskop;
- einem Thermometer;
- einem Kraftsensor;
- einem Hubsensor;
- einem Konzentrationssensor für eine chemische Verbindung;
- einem hygrometrischen Sensor;
- einem Beleuchtungsstärkensensor,
- einem Sensor für elektromagnetische Strahlung;
- mindestens einer Videokamera eines Umweltbildgebungssystems mit geschlossenem Kreis;
- einer Kombination davon.

11. System nach Anspruch 1, wobei das Handstück 20 eine Video-Daten-Umwandlungsvorrichtung umfasst, die dem seriellen Kommunikationsanschluss (24) zugeordnet ist, sodass die zweite Mikroprozessorverarbeitungseinheit (25) Daten von dem Instrument (30) empfangen kann, das als Videoquelle konfiguriert ist.

12. System nach Anspruch 1, wobei das Handstück (20) eine längliche Form aufweist und Folgendes umfasst:
- einen zentralen Griffabschnitt (27), der dazu konfiguriert ist, durch den Mitarbeiter vor Ort ergriffen zu werden;
- zwei gegenüberliegende Endabschnitte (26, 28), wobei der visuelle Sensor (21) in einem ersten Endabschnitt (23) der gegenüberliegenden Endabschnitte (23, 28) angeordnet ist.

13. System (2") nach Anspruch 1, wobei die erste drahtlose Verbindungsschnittstelle (19) zu Folgendem konfiguriert ist:
- Empfangen eines Augmented-Reality-Datenstroms (37) von dem Fernassistenten (51) über das globale Datennetzwerk (3), wobei der Augmented-Reality-Datenstrom (37) grafische Elemente umfasst, die sich auf ein Szenariobild beziehen, das aus dem Bild des ersten Szenarios (11') und dem Bild des zweiten Szenarios (21') ausgewählt ist;
- Überlagern der grafischen Elemente auf dem Szenariobild auf der lokalen Betrachtungseinrichtung (13).

14. System nach Anspruch 13, wobei die erste Mikroprozessorverarbeitungseinheit (15) dazu konfiguriert ist, den ersten Datenstrom (12) an die lokale Betrachtungseinrichtung (13) zu übertragen, wobei die lokale Betrachtungseinrichtung (13) dazu konfiguriert ist, ein Bild des ersten Szenarios (11') für den Mitarbeiter vor Ort ausgehend von dem ersten Datenstrom (12) anzuzeigen, um einen Augmented-Reality-Durchsicht-Videomodus bereitzustellen.

15. System nach Anspruch 1, umfassend die Stütze in Form eines Helms (10) oder Schutzhelms, wobei der Helm (10) oder Schutzhelm und mindestens ein Element, ausgewählt aus der ersten Videokamera (11), der lokalen Betrachtungseinrichtung (13), der ersten Mikroprozessorverarbeitungseinheit (15) und der ersten drahtlosen Verbindungsschnittstelle (19), in Form eines Montagesets bereitgestellt sind.S

## Revendications

1. Système (1, 1', 2, 2', 2") permettant d'assister un opérateur sur site par un assistant distant (51), ledit système comprenant :
- une première caméra vidéo (11) configurée pour :
- être fixée sur un support (10) pouvant être porté sur la tête dudit opérateur sur site ;
- encadrer un premier scénario (11') à partir dudit support (10) ;
- générer un premier flux de données (12) lié audit premier scénario (11') ;
- un dispositif de visualisation local (13) conçu pour être fixé audit support portable (10) et pour être positionné le long d'une ligne de visée dudit opérateur sur site ;
- une première unité de traitement à microprocesseur (15) conçue pour être fixée sur ledit support portable (10) ;
- une première interface de connexion sans fil (19) à un réseau mondial de données (3), conçue pour être fixée audit support portable (10) et pour échanger des données avec un serveur distant (99) via ledit réseau mondial de données (3) ;
- une pièce manuelle (20) comprenant :
- un capteur visuel (21) configuré pour :
- encadrer un second scénario (21') à partir de ladite pièce manuelle (20) ;
- générer un second flux de données (22) lié audit second scénario (21') ;
- un port de communication série (24) pour connecter un instrument (30), ledit port de communication série (24) étant configuré pour recevoir un flux de données supplémentaire (32) provenant dudit instrument (30) ;
- une seconde unité de traitement à microprocesseur (25) ;
- une seconde interface de connexion (26, 29) sélectionnée entre :
- une seconde interface de connexion intérieure (26) entre ladite seconde unité de traitement à microprocesseur (25) et ladite première unité de traitement à microprocesseur (15) ;
- une seconde interface de connexion extérieure (29) audit réseau mondial de données (3), configurée pour échanger des données avec ledit serveur distant (99) via ledit réseau mondial de données (3),
ladite seconde unité de traitement à microprocesseur (25) étant fonctionnellement connectée :
- audit capteur visuel (21), de manière à recevoir ledit second flux de données (22) ;
- à ladite seconde interface de connexion (26, 29), de manière à émettre ledit second flux de données (22),
- audit port de communication série (24), de manière à recevoir ledit flux de données supplémentaire (32), de sorte que ladite seconde interface de connexion (26, 29) puisse également émettre ledit flux de données supplémentaire (32),
ladite première unité de traitement à microprocesseur (15) étant fonctionnellement connectée :
- à ladite première caméra vidéo (11), de manière à recevoir ledit premier flux de données (12) ;
- à ladite seconde interface de connexion intérieure (26) ou à ladite seconde interface de connexion extérieure (29) de ladite pièce manuelle (20) via ledit serveur distant (99) et via ledit réseau mondial de données (3), de manière à recevoir ledit second flux de données (22) ou ledit flux de données supplémentaire (32) ;
- audit dispositif de visualisation local (13), de manière à transférer et à afficher à distance ledit second flux de données (22) ou ledit flux de données supplémentaire (32) au/par ledit dispositif de visualisation local (13) ;
- à ladite première interface de connexion sans fil (19), de manière à échanger ledit premier flux de données (12), ou ledit second flux de données (22), ou ledit flux de données supplémentaire (32) avec ledit serveur distant (99) ou avec ladite seconde interface de connexion intérieure ou extérieure (26, 29) ;
- un dispositif de commutation de scénario (80) connecté fonctionnellement à ladite première unité de traitement à microprocesseur (15) ou à ladite seconde unité de traitement à microprocesseur (25), ledit dispositif de commutation de scénario (80) étant configuré pour sélectionner un flux de données d'intérêt (42) sélectionné entre ledit premier flux de données (12) et ledit second flux de données (22), et ledit flux de données supplémentaire (32), et pour générer un signal de commutation de scénario (81) correspondant audit flux de données d'intérêt (42), qui comprend soit uniquement ledit premier flux de données (12), ou uniquement ledit second flux de données (22), ou uniquement ledit flux de données supplémentaire (32),
dans lequel le système comprend un dispositif informatique sélectionné entre ladite première unité de traitement à microprocesseur (15) et ledit serveur (99) et configuré pour recevoir ledit signal de commutation de scénario (81) et pour transférer sélectivement ledit flux de données d'intérêt (42) en réponse audit signal de commutation de scénario (81)
- à la fois audit dispositif de visualisation local (13) ;
- et à un dispositif de visualisation distant (50),
afin que ledit opérateur sur site, sur ledit dispositif de visualisation local (13), et ledit assistant distant (51), sur ledit dispositif de visualisation distant (50), affichent tous deux :
- soit une image dudit premier scénario (11') ;
- ou, en variante, une image dudit second scénario (21') ;
- ou, en variante, ledit flux de données supplémentaire.

2. Système selon la revendication 1, dans lequel ledit dispositif de commutation de scénario (80) comprend un moyen de commande de commutation de scénario (20d) disposé dans un dispositif qui est compris dans le système et est sélectionné dans le groupe constitué par :
- ladite pièce manuelle (20) ;
- un boîtier (18) de ladite première unité de traitement à microprocesseur (15) ;
- un dispositif de commande à distance ;
- un terminal associé audit dispositif de visualisation distant (50).

3. Système selon la revendication 2, dans lequel ledit moyen de commande de commutation de scénario est un bouton-poussoir (20d), et ledit dispositif de commutation de scénario est configuré de manière à sélectionner ledit premier flux de données (12), ledit second flux de données (22) et ledit flux de données supplémentaire (32) comme étant ledit flux de données d'intérêt par un nombre prédéterminé de coups donnés audit bouton-poussoir (20d).

4. Système (1') selon la revendication 1, dans lequel :
- ladite première interface de connexion sans fil (19) comprend :
- une carte WiFi de communication externe (191) configurée pour une connexion à un réseau WiFi ambiant (5) fournissant un point d'accès (6) audit réseau mondial de données (3) ; et
- une carte WiFi de communication interne (192) configurée pour créer un réseau WiFi local (7) ;
- ladite seconde interface de connexion intérieure (26) comprend une carte WiFi supplémentaire (261) configurée pour une connexion audit réseau WiFi local (7) créé par ladite carte WiFi de communication interne (192).

5. Système (1') selon la revendication 4, dans lequel ledit réseau WiFi ambiant (5) et ledit réseau WiFi local (7) sont configurés pour utiliser différentes bandes de fréquences.

6. Système (1') selon la revendication 4, dans lequel ladite première interface de connexion sans fil (19) comprend un kit de connexion équipé d'une carte SIM pour une connexion audit réseau mondial de données (3) et configuré pour créer ledit réseau WiFi ambiant (5).

7. Système (2') selon la revendication 1, dans lequel ladite première interface de connexion sans fil (19) et ladite seconde interface de connexion extérieure (29) comprennent chacune un dispositif respectif sélectionné dans le groupe constitué par :
- une carte WiFi configurée pour une connexion à un réseau WiFi ambiant (5) fournissant un point d'accès (6) audit réseau mondial de données (3) ;
- un kit de connexion fourni avec une carte SIM pour une connexion audit réseau mondial de données (3).

8. Système selon la revendication 1, dans lequel ledit capteur visuel (21) est sélectionné dans le groupe constitué par :
- une seconde caméra vidéo ;
- une caméra d'imagerie thermique ;
- un capteur visuel intégré fournissant sélectivement les opérations d'une caméra vidéo et d'une caméra d'imagerie thermique.

9. Système selon la revendication 1, dans lequel ladite seconde unité de traitement à microprocesseur (25) est configurée pour suspendre une émission dudit second flux de données (22) lorsqu'elle reçoit/émet ledit flux de données supplémentaire (32).

10. Système selon la revendication 1, comprenant en outre ledit instrument (30), qui est sélectionné dans le groupe constitué par :
- un microscope ;
- un endoscope ;
- un thermomètre ;
- un capteur de force ;
- un capteur de course ;
- un capteur de concentration pour un composé chimique ;
- un capteur hygrométrique ;
- un capteur d'éclairage,
- un capteur de rayonnement électromagnétique ;
- au moins une caméra vidéo d'un système d'imagerie environnementale en circuit fermé ;
- une combinaison de ceux-ci.

11. Système selon la revendication 1, dans lequel ladite pièce manuelle 20 comprend un dispositif de conversion de vidéo en données associé audit port de communication série (24), de sorte que ladite seconde unité de traitement à microprocesseur (25) puisse recevoir des données provenant dudit instrument (30) configuré en tant que source vidéo.

12. Système selon la revendication 1, dans lequel ladite pièce manuelle (20) comporte une forme allongée et comprend :
- une partie poignée centrale (27) conçue pour être saisie par ledit opérateur sur site ;
- deux parties d'extrémité opposées (26, 28), ledit capteur visuel (21) étant agencé dans une première partie d'extrémité (23) desdites parties d'extrémité opposées (23, 28).

13. Système (2") selon la revendication 1, dans lequel ladite première interface de connexion sans fil (19) est configurée pour :
- recevoir un flux de données de réalité augmentée (37) provenant dudit assistant distant (51) via ledit réseau mondial de données (3), ledit flux de données de réalité augmentée (37) comprenant des éléments graphiques liés à une image de scénario sélectionnée entre ladite image dudit premier scénario (11') et ladite image dudit second scénario (21') ;
- superposer lesdits éléments graphiques sur ladite image de scénario sur ledit dispositif de visualisation local (13).

14. Système selon la revendication 13, dans lequel ladite première unité de traitement à microprocesseur (15) est configurée pour transférer ledit premier flux de données (12) audit dispositif de visualisation local (13), ledit dispositif de visualisation local (13) étant configuré pour afficher une image dudit premier scénario (11') audit opérateur sur site à partir dudit premier flux de données (12), de manière à fournir un mode vidéo de réalité augmentée transparente.

15. Système selon la revendication 1, comprenant ledit support sous la forme d'un casque (10) ou d'un casque de protection, dans lequel ledit casque (10) ou ledit casque de protection et au moins un élément sélectionné parmi ladite première caméra vidéo (11), ledit dispositif de visualisation local (13), ladite première unité de traitement à microprocesseur (15) et ladite première interface de connexion sans fil (19) sont fournis sous la forme d'un kit de montage.
